# EUROPÄISCHE PATENTSCHRIFT

(11) **EP 2 410 027 B1**
(45) Veröffentlichungstag und Bekanntmachung des Hinweises auf die Patenterteilung: **02.01.2013**
(21) Anmeldenummer: 10170305.6
(22) Anmeldetag: 21.07.2010
(51) Int. Cl.: C09D 11/10

(54) **Verwendung von Polyvinylisoacetalen in Druckfarbenformulierungen**
Use of polyvinyl isoacetals in printing ink formulas
Utilisation d'iso-acétal de polyvinyle dans des formules de couleurs d'impression

(43) Veröffentlichungstag der Anmeldung: 25.01.2012
(73) Patentinhaber: Kuraray Europe GmbH, 65795 Hattersheim (DE)
(72) Erfinder: Frank, Michael, Dr., 55268 Nieder-Olm (DE)
(74) Vertreter: Kisters, Michael Marcus

(56) Entgegenhaltungen:
- EP-A1- 1 801 132
- NAKURAMA, SUZUKI: "Study on Ketalization Reaction of Poly(vinyl alcohol) by Ketones. VIII" J. POL. SCI., Bd. 34, Nr. 2, 1996, Seiten 3319-3328, XP002608696 DOI: 10. 1002/(SICI)1099-0518(19961130)34:16POLA8>3 .0.co;2-o
- DATABASE WPI Week 198904 Thomson Scientific, London, GB; AN 1989-028845 XP002608697 & JP 63 303361 A (FUJI XEROX CO LTD) 9. Dezember 1988 (1988-12-09)
- DATABASE WPI Week 199018 Thomson Scientific, London, GB; AN 1990-134549 XP002608698 & JP 2 080288 A (HONSHU PAPER MFG CO LTD) 20. März 1990 (1990-03-20)

## Beschreibung

Die Erfindung betrifft die Verwendung von Polyvinylisoacetalen, erhältlich durch Reaktion von Polyvinylalkohol mit verzweigten aliphatischen Aldehyden in Formulierungen für Druckfarben.

### Stand der Technik

Die Verwendung von Polyvinylacetalen, insbesondere Polyvinylbutyralen als Binder in Druckfarbenformulierungen ist lange bekannt.

Hierzu werden häufig Polyvinylacetale (z.B. als Bindemittel in Flexodruckfarben) eingesetzt, die in Lösung eine möglichst niedrige Viskosität aufweisen. So lässt sich gleichzeitig ein hoher Pigment- und Bindemittelanteil in der Druckfarbe realisieren, was dann zu einer gewünschten hohen Farbstärke führt.

Bei der Herstellung von solchen Polyvinylacetalen wird üblicherweise ein entsprechend niedrig viskoser Polyvinylalkohol als Rohstoff gewählt, der dann im Normalfall mit n-Butyraldehyd acetalisiert wird. Als Nachteil dieser Vorgehensweise sind die tendenziell abnehmenden Umsatzraten, sowie Schwierigkeiten bei der Herstellung des Produktes auf Grund der mit dem niedrigen Molekulargewicht einhergehenden niedrigen Glassübergangstemperatur und damit verbundenen zunehmenden Klebrigkeiten zu nennen. Dabei kann die für niedrig viskose Polyvinylacetale typische niedrige Tg (< 65°C) auch in der Endanwendung zu Schwierigkeiten führen, wie z.B. beim Verdrucken der Farbe.

Für die Verwendung in Druckfarben wurden bereits viele chemisch unterschiedliche Polyvinylacetale vorgeschlagen. So ist es bekannt, Copolymerisate von tertiären Vinylestern mit Vinylacetat als Rohstoff für die Herstellung von Polyvinylacetalen einzusetzen, die dann tertiäre Esterfunktionen als Störstelle im Molekül aufweisen. Weiterhin ist es bekannt, neben Butyraldehyd längerkettige Aldehyde mit 5 bis 10 Kohlenstoffatomen zur Acetalisierung zu verwenden. Ebenso können nach oder w ährend der Acetalisierung von Polyvinylalkohol langkettige Moleküle wie Zucker oder Oligoglycole mit der Polymerkette reagieren und ebenso als Störstelle wirken.

Nachteilig an diesen Verfahren ist der hohe Aufwand und die gegenüber der großtechnisch etablierten Acetalisierung von Polvinylalkohol mit Butyraldehyd deutlich höheren Kosten.

### Aufgabe der Erfindung

Es wäre für Druckfarbenformulierungen daher wünschenswert ein Polyvinylacetal zur Verfügung zu haben, dass gleichzeitig eine hohe Tg und eine niedrige Viskosität aufweist, sich ansonsten aber in seinen Eigenschaften, vor allem in der Polarität und den Herstellmethoden, von den bekannten Polyvinylbutyralen nicht signifikant unterscheidet.

Der zur industriellen Herstellung von Polyvinylbutyral verwendete Butyraldehyd besteht ausschließlich aus n-Butyraldehyd. Dies liegt vermutlich an dessen großtechnischer Herstellung durch Hydrocarbonylierung von Propen (Oxo-Verfahren) wodurch thermodynamisch kontrolliert fast ausschließlich n-Butanal erhalten wird.

Durch Acetalisierung von Polvinylalkohol mit iso-Butyraldehyd, hergestellte Polyvinylbutyrale sind bekannte Verbindungen (z.B. aus Fitzhugh, Crozier, J. Pol. Sci. Vol. VIII, No.2, S. 225-241 bzw. Nakamura, Suzuki, J. Pol. Sci, Vol. 34, S 3319-3328(1996)), haben aber auf Grund der im Vergleich zu n-Butyraldehyd geringen industriellen Verfügbarkeit von iso-Butyraldehyd keine technische Bedeutung.

Überraschenderweise wurde gefunden, dass Polyvinylbutyrale auf Basis von iso-Butyraldehyd die geforderten Eigenschaften wie hohe Glasübergangstemperatur und niedrige Viskosität besitzen, gleichzeitig aber keine signifikante Änderung in der Polarität aufweisen und daher gut Pigment benetzend wirken und daher für die Verwendung in Druckfarben gut geeignet sind. Ohne an die Richtigkeit dieser Theorie gebunden zu sein, wird vermutet, dass dies mit einer Verzweigung des Moleküls erklärt werden kann.

### Darstellung der Erfindung

Durch den Einsatz von z.B. iso-Butyraldehyd anstatt dem üblichen n-Buytraldehyd zur Acetalisierung von Polyvinylalkohol erhält man ein Polyvinylacetal, das eine niedrigere Viskosität und eine höhere Glassübergangstemperatur gegenüber einem Vergleichsprodukt gleicher chemischer Zusammensetzung basierend auf n-Butyraldehyd aufweist. Diese Verbindungsklasse wird im Folgenden als Polyvinylisoacetale bezeichnet.

Gegenstand der Erfindung ist die Verwendung von Polyvinylisoacetalen als Binder in Druckfarbenformulierungen, wobei die Acetalgruppe der Polyvinylisoacetale aus einer oder mehreren aliphatischen Ketoverbindungen mit 4 bis 10 Kohlenstoffatomen mit mindestens einer Verzweigung an der alpha- oder beta-Position zur Ketogruppe resultiert.

Durch die erfindungsgemäße Verwendung der Polyvinylisoacetale in Druckfarbenanwendungen ergibt sich der Vorteil einer niedrigeren Viskosität bei gleichem Bindemittelgehalt als bei Verwendung von Polyvinylacetalen mit n-Acetalgruppen. Da in einer Druckfarbe/Druckfarbenkonzentrat Pigment und Bindemittel in einem bestimmten Verhältnis stehen (oft 1 : 1,2) ist bei einer vorgegebenen Endviskosität der Druckfarbe die Menge an Pigment und Bindemittel nicht beliebig zu erhöhen. Hat man nun ein Bindemittel mit niedrigerer Viskosität ist auch dessen Beitrag zur Gesamtviskosität zunächst niedriger. Der Anteil an Pigment kann somit erhöht werden. Gleichzeitig muss auch etwas mehr Bindemittel zugegeben werden. Die Gesamtviskosität überschreitet aber nicht den vorgegebenen max. Wert. Man hat aber mehr Pigment und Bindemittel im System, damit eine höhere Farbstärke.

Einen weiteren Vorteil stellt die erhöhte Tg der Polyvinylisoacetale gegenüber den üblichen n-Acetalen dar. Dies ist bei Druckfarben insofern von Bedeutung, da eine höhere Temperaturbeständigkeit eine geringere Klebrigkeit und späteres Erweichen der Druckfarbe auf der Oberfläche bedeutet. Ein frühzeitiges Erweichen könnte ggf. bei Laminationsdruckfarben zu Delaminierung des Verbundes führen. Auch bei Frontaldruck (Getränkekartons) ist ein vorzeitiges Erweichen der Druckfarbe von Nachteil. Getränkekartons können aneinander kleben bzw. die Farben zerstören.

Erfindungsgemäße Polyvinylisoacetale werden bevorzugt durch Umsetzung von Polvinylalkoholen mit einem oder mehreren aliphatischen Aldehyden mit 4 bis 10 Kohlenstoffatomen mit mindestens einer Verzweigung an der alpha- oder beta-Position zur Aldehydgruppe erhalten.

Im Rahmen der vorliegenden Erfindung werden bevorzugt Polyvinylacetale verwendet, deren Acetalgruppe aus einem oder mehreren aliphatischen Aldehyden oder Ketoverbindungen der Gruppe iso-Butyraldehyd, iso-Valeraldehyd, (alpha)-Isovaleraldehyd [2-Methylbutanal], (beta)-Isovaleraldeyhd [3-Methylbutanal] und Pivalinaldehyd [2,2-dimethylpropanal] resultiert.

Optional können die Polyvinylisoacetale durch gleichzeitige Umsetzung von Polvinylalkoholen mit
a) einer oder mehreren aliphatischen Ketoverbindungen mit 3 bis 10 Kohlenstoffatomen mit mindestens einer Verzweigung an der alpha- oder beta-Position zur Ketogruppe und
b) einer oder mehreren weiteren aliphatischen Ketoverbindungen mit 2 bis 10 Kohlenstoffatomen resultieren.

Der Anteil der Acetalgruppen des Polyvinylisoacetals aus aliphatischen Ketoverbindungen mit 4 bis 10 Kohlenstoffatomen mit mindestens einer Verzweigung an der alpha- oder beta-Position zur Ketogruppe kann in Bezug auf die Acetalgruppen des Polyvinylacetals aus den weiteren aliphatischen Ketoverbindungen mit 2 bis 10 Kohlenstoffatomen 20 bis 95 Mol%, bevorzugt 50-90 Mol% betragen.

Bevorzugt werden als weitere aliphatische Ketoverbindung Acetaldehyd und/oder n-Butyraldehyd eingesetzt.

Erfindungsgemäß verwendete Polyvinylisoacetale weisen bevorzugt eine um mindestens 10 % geringere Viskosität als die entsprechenden Polyvinyl(n)acetale auf. Für diesen Vergleich müssen natürlich bis auf die n/iso-Acetalgruppen ansonsten chemisch identische Polyvinylisoacetale und Polyvinyl(n)acetale herangezogen werden. Die Bestimmung der Viskosität erfolgt nach einer in den Beispielen genannten Methode.

Neben dem polymeren Binder sind übliche Bestandteile der Druckfarbenformulierungen Pigmente, Lösemittel und ggf. Additive wie Wachse, Co-Bindemittel (Ketonharze, Urethane usw.), sowie Dispergierhilfsmittel und Haftvermittler. Erfindungsgemäß werden Polyvinylisoacetale in einem Anteil von 1 bis 30 Gew.%, bezogen auf die Druckfarbenformulierungen verwendet werden.

Im Rahmen der vorliegenden Erfindung ist es auch möglich, Gemische von Polyvinylisoacetalen und den aus dem Stand der Technik bekannten Polyvinylacetalen mit n-Acetalgruppen als Binder für Druckfarben einzusetzen.

Weiterer Gegenstand der Erfindung ist daher die Verwendung eines Gemischs von Polyvinylisoacetalen mit mindestens einem weiteren Polyvinylacetal als Binder in Druckfarbenformulierungen, wobei die Acetalgruppe des Polyvinylisoacetals aus einer oder mehreren aliphatischen Ketoverbindungen mit 4 bis 10 Kohlenstoffatomen mit mindestens einer Verzweigung an der alpha- oder beta-Position zur Ketogruppe resultiert und das mindestens eine weitere Polyvinylacetal durch die Umsetzung von Polyvinylalkohol mit einer oder mehreren weiteren aliphatischen Ketoverbindungen mit 2 bis 10 Kohlenstoffatomen erhalten wird.

Die für die Verwendung von Polyvinylisoacetalen beschriebenen besonderen Ausführungsformen gelten ebenfalls in der Verwendung im Gemisch mit den gängigen Polyvinylacetalen.

Bevorzugt werden die weiteren Polyvinylacetale durch Umsetzung von z.B. Acetaldehyd und/oder n-Butyraldehyd mit Polyvinylalkoholen gewonnen. Die Reaktionsbedingungen entsprechen denen der Polyvinylisoacetale. Besonders wird ein Gemisch aus Polyvinylisoacetal, erhältlich du r c h Umsetzung von Polvinylalkoholen mit iso-Butyraldehyd und Polyvinylacetal, erhältlich durch Umsetzung von Polvinylalkoholen mit n-Butyraldehyd verwendet.

Bevorzugt enthalten die erfindungsgemäß verwendeten Mischungen 10 bis 90 Gew.% Polyvinylisoacetale und 90 bis 10 % weitere Polyvinylacetale, insbesondere je 50 Gew. %.

Die Herstellmethoden der Polyvinylisoacetale unterscheiden sich nicht wesentlich von denen der Polyvinylacetale mit n-Acetalgruppen. Erfindungsgemäß verwendete Polyvinylisoacetale sind durch Reaktion von mindestens einem Polyvinylalkohol mit mindestens einer der genannten Ketoverbindungen unter Säurekatalyse erhältlich. Diese Reaktion ist dem Fachmann bekannt und kann z.B. WO 2009/132987 A1 oder EP 09175666.8 entnommen werden.

Üblicherweise wird bei der Herstellung von Polyvinylacetalen zunächst der Polyvinylalkohol unter Erwärmen in Wasser gelöst und im Reaktionsgefäß bei einer Temperatur von ca. 0 bis 20 °C vorgelegt. Hierzu werden in der ersten Verfahrensvariante eine Säure (HCl, HNO₃ oder H₂SO₄) oder in einer weiteren Variante ein oder mehrere Ketoverbindungen oder Aldehyde zugegeben. Als Ketoverbindung oder Aldehyd wird bevorzugt iso-Butyraldehyd unter Erhalt von Polyvinylisobutyral eingesetzt.

Je nach Verfahrensvariante wird bei der genannten Temperatur zur Mischung Polyvinylalkohol und Säure die gewünschten Ketoverbindungen oder zur Mischung Polyvinylalkohol und Ketoverbindung eine Säure zugegeben. Die jeweilige Zugabe erfolgt, bis der gewünschte Acetalisierungsgrad des Polyvinylacetals erreicht ist und dieser als Feststoff aus der Reaktionsmischung ausfällt. Die Zugabe der Säure bzw. der Ketoverbindungen in Verfahrensschritt a) kann in verschiedenen Dosierzeiten und/oder mit einer Dosierpause erfolgen.

Zur Vervollständigung der Reaktion wird die Reaktionsmischung in Verfahrensschritt b) auf 30 bis 90 °C, bevorzugt 35 bis 80 °C erhitzt und bei dieser Temperatur eine gewisse Zeit gehalten. Bei dieser so genannten Heißmodifizierung kann neben einer Vervollständigung der Acetalisierungsreaktion auch intramolekulare Umacetalisierung unter Ausbildung von Acetal- und Alkoholdomänen stattfinden.

Bevorzugt weisen die erfindungsgemäß verwendeten Polyvinylisoacetale einen Restalkoholgehalt von 10% bis 30%, besonders bevorzugt von 15% bis 25% und/oder einen Acetalisierungsgrad von 62% bis 89,5%, besonders bevorzugt von 67% bis 84,5% auf.

### Messmethoden:

a) Bestimmung des Polyvinylacetatgehalts
   Unter dem Polyvinylacetatgehalt wird der gewichtsprozentige Anteil an Acetylgruppen verstanden, der sich aus dem Verbrauch der für die Verseifung von 1 g Substanz notwendigen Menge Kalilauge ergibt.
   Bestimmungsmethode (in Anlehnung an EN ISO 3681):
   Etwa 2 g der zu untersuchenden Substanz werden in einem 500 ml Rundkolben auf 1 mg genau eingewogen und mit 90 ml Ethanol und 10 ml Benzylalkohol am Rückfluss gelöst. Nach dem Abkühlen wird die Lösung mit 0,01 n NaOH gegen Phenolphthalein neutral gestellt. Anschließend werden 25, 0 ml 0, 1 n KOH zugegeben und 1, 5 Stunden am Rückfluss erhitzt. Man lässt den Kolben verschlossen abkühlen und titriert den Laugenüberschuss mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] - (b-a)*86/E, mit a = Verbrauch an 0, 1 n KOH für Probe in ml, b = Verbrauch an 0,1 n KOH für Blindversuch in ml und E = Einwaage der zu untersuchenden Substanz trocken in g.
b) Bestimmung des Polyvinylalkoholgruppengehalts Der Polyvinylalkoholgruppengehalt (Polyvinylalkoholgehalt) ist der Anteil an Hydroxylgruppen, der durch die nachträgliche Acetylierung mit Essigsäureanhydrid nachweisbar ist. Bestimmungsmethode (in Anlehnung an DIN 53240):
   Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml 1,2-Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphthalein titriert. In gleicher Weise wird eine Blindprobe behandelt. Der Polyvinylalkoholgehalt berechnet sich wie folgt: Polyvinylalkoholgehalt [%] = (b-a)*440/E, mit a = Verbrauch an 1 n NaOH für Probe in ml, b = Verbrauch an 1 n NaOH für Blindprobe in ml, und E = Einwaage der zu untersuchenden Substanz trocken in g.
c) Bestimmung der Viskosität
   Die Viskosität der verwendeten Polyvinylacetale wird gemäß DIN 53015 an einer Lösung in Ethanol, n-Buthanol oder MEK (Methylethylketon) bei 20 °C im Hoeppler-Viskosimeter bestimmt.

### Beispiele:

Es wurden reine und gemischte Polyvinylisoacetale und Polyvinylacetale durch säurekatalysierte Umsetzung von iso-Butyraldehyd bzw. n-Butyraldehyd und den Aldehydmischungen iso-Butyraldehyd/Acetaldehyd bzw. n-Butyraldehyd/Acetaldehyd jeweils mit dem gleichem Polyvinylalkohol hergestellt und auf ihre Verwendung in Druckfarbenformulierungen geprüft.

### Beispiel 1

540 g Polyvinylalkohol mit einer Viskosität (4% in Wasser) von 3,06 mPas und einem Hydrolysegrad von 96,5 Mol% werden in 6660 mL Wasser gelöst. Nach dem Eintrag von 340 g iso-Butyraldehyd wird unter Zudosieren von 870 mL 20%iger Salzsäurelösung die Reaktion bei 4°C gestartet. Nach Beenden der Salzsäuredosierung wird die Reaktionslösung über einen Zeitraum von 2 Stunden auf 36°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Vergleichsbeispiel 1

540 g Polyvinylalkohol mit einer Viskosität (4% in Wasser) von 3,06 mPas und einem Hydrolysegrad von 96,5 Mol% werden in 6660 mL Wasser gelöst. Nach dem Eintrag von 340 g n-Butyraldehyd wird unter Zudosieren von 870 mL 20%iger Salzsäurelösung die Reaktion bei 4°C gestartet. Nach Beenden der Salzsäuredosierung wird die Reaktionslösung über einen Zeitraum von 2 Stunden auf 36°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Beispiel 2

684 g Polyvinylalkohol mit einer Viskosität (4% in Wasser) von 4,60 mPas und einem Hydrolysegrad von 98,5 Mol% werden in 6516 mL Wasser gelöst. Nach dem Eintrag von 394 g iso-Butyraldehyd wird unter Zudosieren von 820 mL 20%iger Salzsäurelösung die Reaktion bei 4°C gestartet. Nach Beenden der Salzsäuredosierung wird die Reaktionslösung über einen Zeitraum von 2 Stunden auf 44°C erwärmt und weitere 1,5 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Vergleichsbeispiel 2

684 g Polyvinylalkohol mit einer Viskosität (4% in Wasser) von 4,60 mPas und einem Hydrolysegrad von 98,5 Mol% werden in 6516 mL Wasser gelöst. Nach dem Eintrag von 394 g n-Butyraldehyd wird unter Zudosieren von 820 mL 20%iger Salzsäurelösung die Reaktion bei 4°C gestartet. Nach Beenden der Salzsäuredosierung wird die Reaktionslösung über einen Zeitraum von 2 Stunden auf 44°C erwärmt und weitere 1,5 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Beispiel 3

648 g Polyvinylalkohol mit einer Viskosität (4% in Wasser) von 9,94 mPas und einem Hydrolysegrad von 98,4 Mol% werden in 6552 mL Wasser gelöst. Nach dem Eintrag von 400 g iso-Butyraldehyd wird unter Zudosieren von 780 mL 20%iger Salzsäurelösung die Reaktion bei 4°C gestartet. Nach Beenden der Salzsäuredosierung wird die Reaktionslösung über einen Zeitraum von 2 Stunden auf 48°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Vergleichsbeispiel 3

648 g Polyvinylalkohol mit einer Viskosität (4% in Wasser) von 9,94 mPas und einem Hydrolysegrad von 98,4 Mol% werden in 6552 mL Wasser gelöst. Nach dem Eintrag von 400 g n-Butyraldehyd wird unter Zudosieren von 780 mL 20%iger Salzsäurelösung die Reaktion bei 4°C gestartet. Nach Beenden der Salzsäuredosierung wird die Reaktionslösung über einen Zeitraum von 2 Stunden auf 48°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 20 mL 10%iger Natronlauge versetzt und abermals leicht erwärmt. Überschüssige Lauge wird mit Waschen mit Wasser entfernt. Anschließend wird das Produkt getrocknet.

### Beispiel 4 (gemischte Acetal aus iso-BuA + AcA)

720 g Polyvinylalkohol mit einer Viskosität (4% in Wasser) von 3,06 mPas und einem Hydrolysegrad von 96,5 Mol% werden in 6480 mL Wasser gelöst. Nach dem Eintrag von 152,2 g Acetaldehyd und 204,2 g iso-Butyraldehyd wird unter Zudosieren von 1330 mL 20%iger Salzsäurelösung die Reaktion bei 8°C gestartet. Nach Beenden der Salzsäuredosierung wird die Reaktionslösung über einen Zeitraum von 2 Stunden auf 36°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 40 mL 10%iger Natronlauge versetzt und abermals leicht erwärmt. Überschüssige Lauge wird mit Waschen mit Wasser entfernt. Anschließend wird das Produkt getrocknet.

### Vergleichsbeispiel 4 (gemischte Acetal aus n-BuA + AcA)

720 g Polyvinylalkohol mit einer Viskosität (4% in Wasser) von 3,06 mPas und einem Hydrolysegrad von 96,5 Mol% werden in 6480 mL Wasser gelöst. Nach dem Eintrag von 152,2 g Acetaldehyd und 204,2 g n-Butyraldehyd wird unter Zudosieren von 1330 mL 20%iger Salzsäurelösung die Reaktion bei 8°C gestartet. Nach Beenden der Salzsäuredosierung wird die Reaktionslösung über einen Zeitraum von 2 Stunden auf 36°C erwärmt und weitere 2 Stunden bei dieser Temperatur gehalten. Der ausgefallene Feststoff wird abfiltriert und hinreichend mit Wasser gewaschen. Zwecks Neutralisation bzw. Alkalisierung wird die Produktsuspension mit 40 mL 10%iger Natronlauge versetzt und abermals leicht erwärmt. Überschüssige Lauge wird mit Waschen mit Wasser entfernt. Anschließend wird das Produkt getrocknet.

Von den erhaltenen Produkten aus den Beispielen/Vergleichsbeispielen 1 - 4 wurden Lösungen hergestellt und diese hinsichtlich Ihrer Viskosität untersucht. Weiterhin wurden diese Produkte analytisch charakterisiert. Die Ergebnisse sind in Tabelle 1 dargestellt.

Für das Produkt aus Bsp. 1 und Vergleichsbeispiel 1 wurde eine Ausprüfung in der Druckfarbenanwendung durchgeführt. Die Ergebnisse sind in den Tabelle 2 und 3 aufgeführt.

Es zeigt sich, dass alle Polyvinylisoacetale eine niedrigere Viskosität gegenüber den Polyvinylacetalen aufweisen und dadurch in der Druckfarbenformulierung ein höherer Feststoffanteil bestehend aus Pigment und Bindemittel bei vorgegebener max. Viskosität erreicht werden kann. Hierdurch wird eine höhere Farbstärke erzielt. Entsprechend den erhaltenen Ergebnissen weisen alle Polyvinylisoacetale gegenüber den Polyvinylacetalen eine höhere Glasübergangstemperatur (Tg) auf. Dies führt in der Endanwendung zu deutlich reduzierten Klebrigkeiten, die unerwünscht sind.

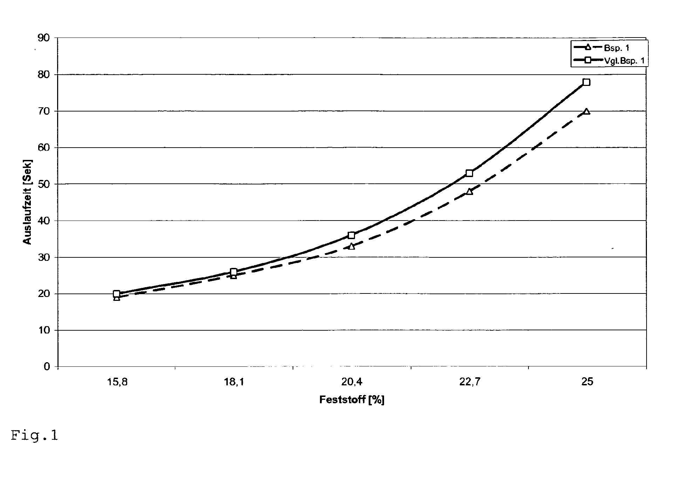

Wie in Fig 1 dargestellt, liefert das Polyvinylisobutyraldehydacetal gelöst in Ethanol bei den üblicherweise zur Herstellung von Druckfarbenkonzentraten verwendeten Feststoffkonzentrationen (> 20%) eine deutlich niedrigere Lösungsviskosität. Dies erlaubt bei vorgegebener Viskosität eines Farbkonzentrates bzw. einer Druckfarbe die Verwendung von mehr Bindemittel und Pigment. Dadurch erhält man höhere Farbstärken bei gleicher Druckviskosität. Diese höhere Farbstärken wiederum erlaubt die Anwendung von höheren Druckgeschwindigkeiten, was zu höheren Durchsätzen und damit zu Zeitersparnis im Druckprozess führt.

### Analysenergebnisse:

**Tabelle 1**

| | Bsp. 1 | VBsp.1 | Bsp. 2 | VBsp. 2 | Bsp. 3 | VBsp. 3 | Bsp. 4 | VBsp. 4 |
|---|---|---|---|---|---|---|---|---|
| PVOH [wt%] | 19,4 | 17,5 | 21,3 | 19,8 | 19,9 | 18, 7 | 16,0 | 16,1 |
| PVOAc [wt%] | 3,8 | 3,8 | 2, 0 | 2,6 | 1,9 | 2,2 | 3,8 | 3,7 |
| Viskosität [mPas] in 10% Ethanol | 15,7 | 17,7 | 40,3 | 45,2 | 185,1 | 229,6 | 17,1 | 19,5 |
| Viskosität [mPas] 10% n-Butanol | 40,8 | 43,1 | 101,8 | 115,5 | 520 | 712 | 42,3 | 46,7 |
| Viskosität [mPas] in 20% MEK | 33, 6 | 41,8 | 213 | 375 | 3300 | 16500 | 37,8 | 48,4 |
| Tg [°C] | 72 | 63 | 79 | 69 | 81 | 70 | 86 | 84 |

### Ergebnisse der Druckfarbenausprüfung:

**Tabelle 2**

| | Auslaufzeit [s], DIN 53211/4 mm/23°C | | | | |
|---|---|---|---|---|---|
| | Konzentration der ethanolischen Lösungen | | | | |
| Konzentration | 15,0 | 17,5 | 20,0 | 22,5 | 25,0 |
| Beispiel 1 | 19 | 25 | 33 | 48 | 70 |
| Vgl.-Bsp. 1 | 20 | 26 | 36 | 53 | 78 |
| Beispiel 4 | 14 | 17 | 22 | 31 | 50 |
| Vgl.-Bsp. 4 | 15 | 18 | 24 | 35 | 56 |

**Tabelle 3**

| | Auslaufzeit [s], DIN 53211/4 mm/23°C | | | | |
|---|---|---|---|---|---|
| | Konzentration der ethanolischen Lösungen | | | | |
| Konzentration | 5,0 | 7,5 | 10,0 | 12,5 | 15,0 |
| Beispiel 2 | - | - | 16 | 23 | 45 |
| Vgl.-Bsp. 2 | - | - | 18 | 26 | 49 |
| Beispiel 3 | 14 | 17 | 27 | 52 | 109 |
| Vgl.-Bsp. 3 | 14 | 18 | 29 | 57 | 120 |

**Tabelle 4**

| | Bsp. 1 | Vgl.- Bsp. 1 | Bsp. 2 | Vgl.-Bsp. 2 | Bsp. 3 | Vgl. - Bsp. 3 | Bsp. 4 | Vgl.-Bsp. 4 |
|---|---|---|---|---|---|---|---|---|
| Glanz auf OPP 60 Grad [°] | 75 | 78 | 80 | 79 | 77 | 73 | 72 | 70 |
| Auslaufzeit Farbkonzentrat [Sek] konst. Pigm/Bindemittelverhältnis | 47 | 53 | 72 | 80 | 105 | 121 | 37 | 41 |
| Rel. Farbstärke [%] - 25 s Druckfarbe | 100, 0 | 94,1 | 100,0 | 95, 6 | 100,0 | 97,2 | 100,0 | 94,7 |
| Pigmentanteil - 25 s Druckfarbe | 12,2 | 11,2 | 10,8 | 9,2 | 8,2 | 6, 9 | 12,4 | 11,3 |
| Haftungstest - peel off - 25 s Druckfarbe | 1,99 | 1,53 | 1,96 | 1, 66 | 1,85 | 1,51 | 1,78 | 1,41 |

## Patentansprüche

1. Verwendung von Polyvinylisoacetalen als Binder in Druckfarbenformulierungen, **dadurch gekennzeichnet dass** die Acetalgruppe der Polyvinylisoacetale aus einer oder mehreren .aliphatischen Ketoverbindungen mit 4 bis 10 Kohlenstoffatomen mit mindestens einer Verzweigung an der alpha- oder beta-Position zur Ketogruppe resultiert.

2. Verwendung nach Anspruch 1 **dadurch gekennzeichnet dass** die Polyvinylisoacetale durch gleichzeitige Umsetzung von Polvinylalkoholen mit
a) einer oder mehreren aliphatischen Ketoverbindungen mit 4 bis 10 Kohlenstoffatomen mit mindestens einer Verzweigung an der alpha- oder beta-Position zur Ketogruppe und
b) einer oder mehreren weiteren aliphatischen Ketoverbindungen mit 2 bis 10 Kohlenstoffatomen resultiert.

3. Verwendung nach Anspruch 1 oder 2, **dadurch gekennzeichnet, dass** als aliphatische Ketoverbindung mit 4 bis 10 Kohlenstoffatomen mit mindestens einer Verzweigung an der alpha- oder beta-Position zur Ketogruppe mindestens eine Verbindung der Gruppe iso-Butyraldehyd, iso-Valeraldehyd, (alpha)-Isovaleraldehyd [2-Methylbutanal], (beta)-Isovaleraldeyhd [3-Methylbutanal] und Pivalinaldehyd [2,2-dimethylpropanal] eingesetzt wird.

4. Verwendung nach einem der Ansprüche 1 bis 3, **dadurch gekennzeichnet, dass** die Polyvinylisoacetale einen Restalkoholgehalt von 10% - 30% aufweisen.

5. Verwendung nach einem der Ansprüche 1 bis 4, **dadurch gekennzeichnet, dass** die Polyvinylisoacetale einen Acetalisierungsgrad von 62% - 89,5% aufweisen.

6. Verwendung nach einem der Ansprüche 1 bis 5, **dadurch gekennzeichnet, dass** die Polyvinylisoacetale eine um mindestens 10 % geringere Viskosität als die entsprechenden Polyvinyl(n)acetale aufweisen.

7. Verwendung eines Gemischs von Polyvinylisoacetalen mit mindestens einem weiteren Polyvinylacetal als Binder in Druckfarbenformulierungen, **dadurch gekennzeichnet, dass** die Acetalgruppe des Polyvinylisoacetals aus einer oder mehreren aliphatischen Ketoverbindungen mit 4 bis 10 Kohlenstoffatomen mit mindestens einer Verzweigung an der alpha- oder beta-Position zur Ketogruppe resultiert und das mindestens eine weitere Polyvinylacetal durch die Umsetzung von Polyvinylalkohol mit einer oder mehreren weiteren aliphatischen Ketoverbindungen mit 2 bis 10 Kohlenstoffatomen erhalten wird.

8. Verwendung nach Anspruch 7, **dadurch gekennzeichnet, dass** die Polyvinylisoacetale durch Umsetzung von Polvinylalkoholen mit iso-Butyraldehyd und die Polyvinylacetale durch Umsetzung von Polvinylalkoholen mit n-Butyraldehyd erhalten werden.

## Claims

1. Use of polyvinyl isoacetals as a binder in printing ink formulations, **characterised in that** the acetal group of the polyvinyl isoacetals results from one or more aliphatic keto compounds containing 4 to 10 carbon atoms with at least one branching at the alpha-position or beta-position to the keto group.

2. The use according to claim 1, **characterised in that** the polyvinyl isoacetals result by simultaneous reaction of polyvinyl alcohols with
a) one or more aliphatic keto compounds containing 4 to 10 carbon atoms with at least one branching at the alpha-position or beta-position to the keto group, and
b) one or more further aliphatic keto compounds containing 2 to 10 carbon atoms.

3. The use according to claim 1 or 2, **characterised in that** at least one compound from the group of isobutyraldehyde, isovaleraldehyde, (alpha)isovaleraldehyde [2-methylbutanal], (beta)isovaleraldehyde [3-methylbutanal] and pivalic aldehyde [2,2-dimethylpropanal] is used as an aliphatic keto compound containing 4 to 10 carbon atoms with at least one branching at the alpha-position or beta-position to the keto group.

4. The use according to one of claims 1 to 3, **characterised in that** the polyvinyl isoacetals have a residual alcohol content of 10 % to 30 %.

5. Use according to one of claims 1 to 4, **characterised in that** the polyvinyl isoacetals have a degree of acetalisation of 62 % to 89.5 %.

6. The use according to one of claims 1 to 5, **characterised in that** the polyvinyl isoacetals have a viscosity that is at least 10 % lower than that of the corresponding polyvinyl (n)acetals.

7. Use of a mixture of polyvinyl isoacetals with at least one further polyvinyl acetal as a binder in printing ink formulations, **characterised in that** the acetal group of the polyvinyl isoacetal results from one or more aliphatic keto compounds containing 4 to 10 carbon atoms with at least one branching at the alpha-position or beta-position to the keto group, and the at least one further polyvinyl acetal is obtained by reacting polyvinyl alcohol with one or more further aliphatic keto compounds containing 2 to 10 carbon atoms.

8. The use according to claim 7, **characterised in that** the polyvinyl isoacetals are obtained by reacting polyvinyl alcohols with isobutyraldehyde, and the polyvinyl acetals are obtained by reacting polyvinyl alcohols with n-butyraldehyde.

## Revendications

1. Utilisation d'iso-acétal de polyvinyle en tant que liant dans des formules de couleurs d'impression, **caractérisée en ce que** le groupe acétal de l'iso-acétal de polyvinyle résulte d'un ou de plusieurs composés cétoniques aliphatiques avec de 4 à 10 atomes de carbone avec au moins une ramification en position alpha ou bêta vers le groupe cétonique.

2. Utilisation selon la revendication 1, **caractérisée en ce que** l'iso-acétal de polyvinyle résulte d'une transformation simultanée d'alcools polyvinyliques avec
a) un ou plusieurs composés cétoniques aliphatiques avec de 4 à 10 atomes de carbone avec au moins une ramification en position alpha ou bêta vers le groupe cétonique et
b) un ou plusieurs composés cétoniques aliphatiques supplémentaires avec de 2 à 10 atomes de carbone.

3. Utilisation selon la revendication 1 ou 2, **caractérisée en ce qu'**on met en oeuvre en tant que composé cétonique aliphatique avec de 4 à 10 atomes de carbone avec au moins une ramification en position alpha ou bêta vers le groupe cétonique au moins un composé du groupe comprenant l'iso-butyraldéhyde, l'iso-valéraldéhyde, (l'alpha)-iso-valéraldéhyde [2-méthylbutanal], le (bêta)-iso-valéraldéhyde [3-méthylbutanal] et le pivalinaldéhyde [2,2-diméthylpropanal].

4. Utilisation selon l'une quelconque des revendications 1 à 3, **caractérisée en ce que** l'iso-acétal de polyvinyle présente une teneur résiduelle en alcool de 10% à 30%.

5. Utilisation selon l'une quelconque des revendications 1 à 4, **caractérisée en ce que** l'iso-acétal de polyvinyle présente un degré d'acétalisation de 62% à 89,5%.

6. Utilisation selon l'une quelconque des revendications 1 à 5, **caractérisée en ce que** l'iso-acétal de polyvinyle présente une viscosité inférieure d'au moins 10 % à celle du (n)acétal de polyvinyle correspondant.

7. Utilisation d'un mélange d'iso-acétal de polyvinyle avec au moins un acétal de polyvinyle supplémentaire en tant que liant dans la formulation de couleurs d'impression, **caractérisée en ce que** le groupe acétal de l'iso-acétal de polyvinyle résulte d'un ou de plusieurs composés cétoniques aliphatiques avec de 4 à 10 atomes de carbone avec au moins une ramification en position alpha ou bêta vers le groupe cétonique et **en ce qu'**on obtient au moins un acétal de polyvinyle supplémentaire par la transformation d'alcool polyvinylique avec un ou plusieurs composés cétoniques aliphatiques supplémentaires avec de 2 à 10 atomes de carbone.

8. Utilisation selon la revendication 7, **caractérisée en ce qu'**on obtient l'iso-acétal de polyvinyle par la transformation d'alcools polyvinyliques avec de l'iso-butyraldéhyde et l'acétal de polyvinyle par la transformation d'alcools polyvinyliques avec du n-butyraldéhyde.
